# EUROPEAN PATENT SPECIFICATION

(11) **EP 1 863 712 B1**
(45) Date of publication and mention of the grant of the patent: **04.05.2011**
(21) Application number: 06727311.0
(22) Date of filing: 13.03.2006
(51) Int. Cl.: B65C 3/16, G01N 35/04

(54) **APPARATUS FOR THE SELECTION AND LABELLING OF TEST TUBES FOR ANALYSIS LABORATORIES AND THE LIKE**
VORRICHTUNG ZUR AUSWAHL UND ETIKETTIERUNG VON TESTRÖHRCHEN FÜR ANALYSELABORATORIEN UND DERGLEICHEN
APPAREIL DE SELECTION ET D'ETIQUETAGE DE TUBES D'ESSAI DESTINES A DES LABORATOIRES D'ANALYSE ET ANALOGUES

(30) Priority: 15.03.2005 IT RM20050116
(43) Date of publication of application: 12.12.2007
(73) Proprietor: Seac S.r.l. Con socio unico, 50131 Firenze (IT)
(72) Inventor: GIACALONE, Luigi, Adriano c/o SEAC S.r.l. Con Socio Unico, I-50041 CALENZANO (Firenze) (IT)
(74) Representative: Minoja, Fabrizio
(86) International application number: PCT/IB2006/000550
(87) International publication number: WO 2006/097813

(56) References cited:
- EP-A- 0 819 470
- EP-A- 1 353 183
- EP-A- 1 410 996
- US-A- 5 688 361
- PATENT ABSTRACTS OF JAPAN vol. 2000, no. 19, 5 June 2001 (2001-06-05) & JP 2001 037743 A (TECHNO MEDICA CO LTD), 13 February 2001 (2001-02-13)

## Description

This invention relates to a computerised machine designed to provide doctors responsible for taking blood samples with test tubes ready selected and labelled, according to the request of the patient from whom the sample is taken.

Analysis laboratories usually fill with blood one or more test tubes designed for various types of test. These test tubes have different cap colours and sizes, according to the criteria dictated by analysis laboratories.

In a normal, correctly computerised analysis laboratory, the request for the various tests for each patient should be input into a computer, which prints an identifying barcode onto the necessary adhesive labels. The labels are manually stuck onto the test tubes by the doctor who takes the sample or another employee responsible for this task. This entails great wastage of time and a considerable risk of error, because it is sufficient to stick one patient's label onto another patient's test tube, or a label for one type of test onto another test tube, to invalidate the test result, sometimes with dramatic consequences.

Machines that distribute test tubes labelled with barcodes exist, but they are very expensive as they are highly complex. They usually consist of a set of loaders, a robotised selector gripper with the task of picking up the test tubes from the various loaders and positioning them under the labelling device, and a system for the transport and collection of the labelled test tubes.

The loaders are usually made with belts positioned both horizontally and vertically, to which the containers into which the test tubes are loaded are attached. The test tubes are usually loaded by falling, and this solution requires the construction of devices that retain the test tube during the fall, so that it remains available to the selector grippers. However, the assembly often jams because the test tubes do not always fall correctly. This device also takes up space, making the machines cumbersome, and in any event involves additional costs.

EP 1 410 996 A discloses a test tube selection and labelling machine according to the preamble of claim 1, comprising test tube loaders in the form of flat belts on which containers with semi-encircling arms for retaining test-tubes are mounted.

The purpose of this invention is to offer a compact, modular, multipurpose machine which provides the doctor taking the blood sample with the test tubes required for the patient in question ready selected and labelled, with a series of controls which eliminate any kind of error, at very low cost, and with efficient operation.

This aim is achieved by the invention with the features listed in the characterizing portion of claim 1, Preferred embodiments of the invention are described in the dependent claims.

The machine is based on a new type of modular loader whereby the test tube, inserted into the container from above, can be picked up directly from the loader by a gripper with a simple release mechanism and deposited in the collection drawer by this particular pick-up gripper, which performs all the movement functions of the test tubes, from selection of the correct loader to labelling.

In a currently preferred embodiment, this invention features a modular system of loaders, consisting of a sheet metal drawer with motor-driven pulleys fitted on one side and the same number of free pulleys on the opposite side. A flat belt, on which a series of particular containers designed to contain the test tubes are mounted, is fitted to said pulleys.

Said containers are made of plastic, with a semicylindrical body, having a central opening which allows the passage of the pick-gripper jaws, and four elastic semi-encircling arms which retain the test tube in the container, but let it pass when the time comes for it to be removed.

According to this invention, the pick-up grippers consist of a body mounted on slides or the like which can move both horizontally and vertically. An arm on which a slider runs is fitted on the body of the grippers. Two spring-loaded jaws made of laminated steel are fitted to said slider. Said jaws are designed to hold the test tubes to be picked up at their ends, while a wedge element in the rear part, pushed by a spring, is designed to keep the jaws half-open to facilitate the entry of the test tube when the grippers pick it up, and to close them when the gripper grips the test tube. This system enables a single device to perform all the operations required to select and label the test tubes and deposit them in the collection container on the worktop of the machine.

The slider will conveniently be driven by a gear motor and a cam, controlled by two limit switches, with corresponding connecting rod to slide back and forth, and the slides are driven by stepper motors to take the grippers to the correct operating position. All this is managed by the computerised control unit of the machine.

Also according to this invention, a particular labelling gripper, positioned on the upper part of the machine, grips the test tube to be labelled between the cap and the base via two cup-shaped elements, one of which is motor-driven, while the other revolves on a bearing.

The two cup elements are mounted on sliders; the upper slider is pushed downwards by a spring, while the lower slider is drawn upwards by a cog belt driven by a stepper motor. All this is managed by the electronic control unit of the machine, and controlled by a limit switch.

The labelling grippers are equipped with a rubber roller mounted on arms driven by an actuator or the like, which causes the roller to rest on the test tube when said tube is gripped by the grippers, so that the adhesive label which exits from the print head of an ordinary label printer is inserted between the roller and the test tube and adheres to the test tube.

The grippers deposit the labelled test tubes in a drawer on the worktop of the machine by means of a simple release system.

The device according to the invention also includes electronic management means, data saving and processing means, data entry and video communication means, and means for controlling the pick-up of the test tubes from the drawer.

The machine according to the invention is also equipped with management software, warning lights and buzzers, and suitable sensors designed to control the movements of the various parts, and the normal supply of test tubes and adhesive labels.

Other characteristic purposes and advantages of this invention will become clear from the following description of a currently preferred embodiment, given by way of example but not of limitation, by reference to the annexed figures, wherein:
Figure 1 shows a complete loader.
Figure 2 shows the test tube container from the front, side and in profile.
Figure 3 shows a partial view of a loader with three belts, and the pick-up grippers seen from above.
Figure 4 shows a two-drawer version of the machine, seen from the side.
Figure 5 shows a three-drawer version of the machine, seen from the rear.
Figure 6 shows a view of the pick-up grippers which discharge a labelled test tube into the drawer.

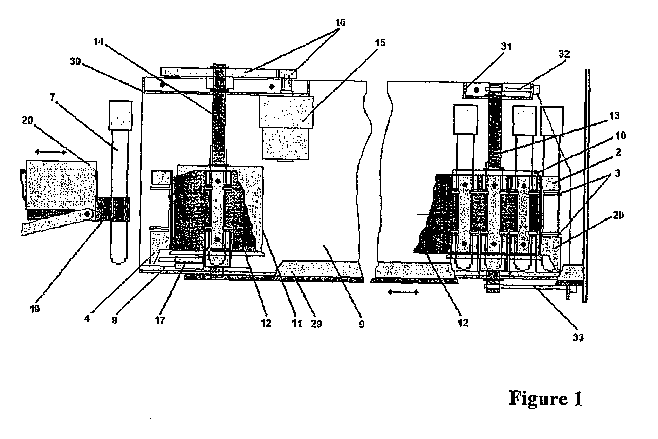

With reference to the drawings, and in particular to figure 1, the loader is constructed on a U-shaped sheet metal drawer 9, which is mounted on slides 29 to allow loading. Crosspieces 30 and 31 are mounted on the upper part of said loader. A shaft 14 is inserted between crosspiece 30 and base 18, and a pulley 11, driven by gear motor 15 via gear pair 16, is connected to said shaft.

A shaft fitted with two tensioning screws 32 and 33, to which a pulley 10 is connected, is inserted between crosspiece 31 and the base. Belt 12, on which the test tube containers described below are mounted, is inserted onto the two pulleys 10 and 11. Lever-operated microswitch 17 checks for the presence of the test tube and shuts down the gear motor when the test tube pushes the lever, thus controlling the movement of the belt.

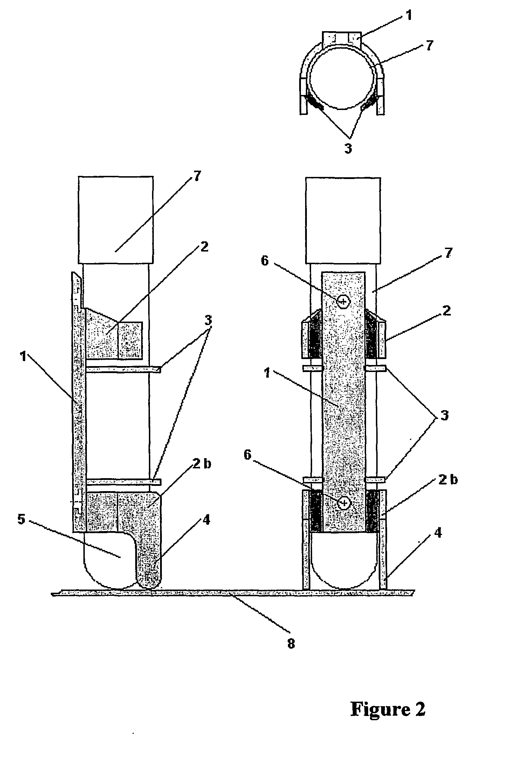

As shown in figure 2, the test tube container consists of a rectangular section 1, containing fixing holes 6 and 6 b, four semicircular walls 2 and 2 b, and four elastic arms 3 which encircle and retain test tube 7, with the base resting on the top of the drawer. Lower semicircular walls 2 b are fitted with two appendices 4, which act as feet to discharge the weight onto soundproofed base 8, maintaining the belt perfectly perpendicular. Housing 5 allows the passage of the control microswitch lever described above.

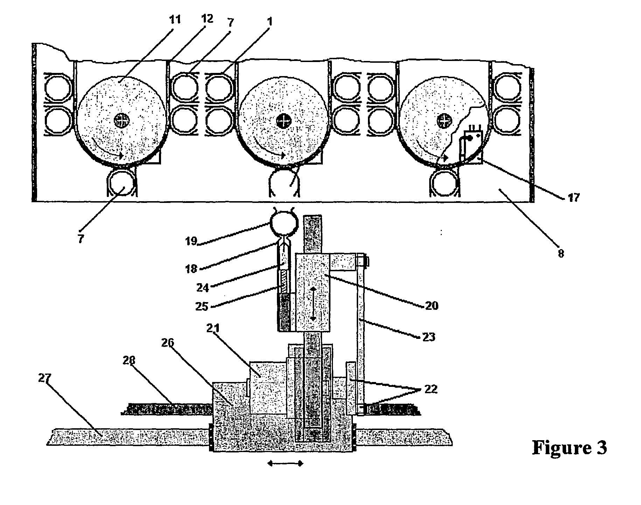

Figure 3 shows the body of pick-up grippers 26 mounted on guides 27 and pulled by cog belt 28, slider 20, driven by gear motor 21 via eccentric bolt 22 and connecting rod 23. Two spring-loaded jaws 19 made of laminated steel are mounted on slider 20. Said jaws are shaped in such a way as to retain the test tube to be picked up at their ends and form a constriction 18, into which wedge element 24 is pushed by spring 25.

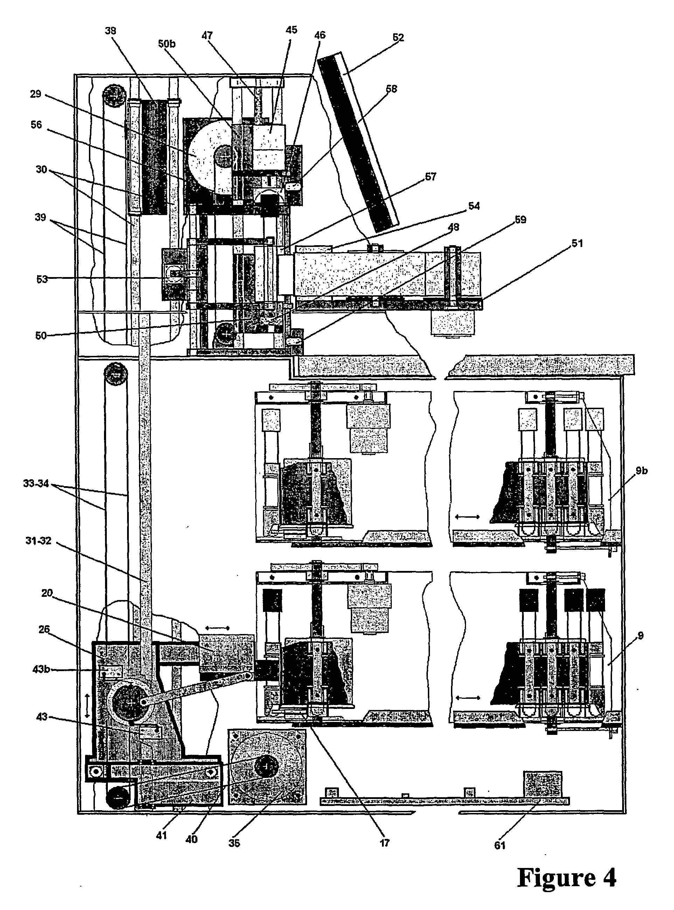

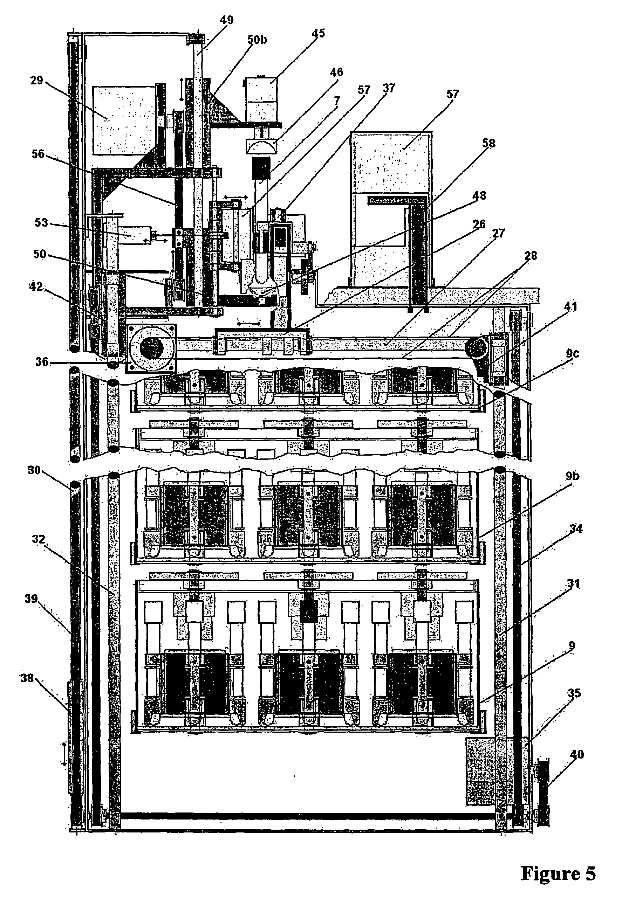

Figure 4 shows the machine in a version with two stacked loading drawers, 9 and 9 b, and grippers 26, which run up and down via sliders 41 and (42 shown in fig. 5) on guides 31-32, pulled by belts 33-34 which are driven by stepper motor 35 via belt 40. Counterweight 38, which runs on guides 30, hangs from cog belt 39.

Figures 4 and 5 show the body of the labelling grippers, with guides 49 on which sliders 50 and 50 b slide. Slider 50 b is pushed downwards by spring 47. Gear motor 45 is mounted on the arm of slider 50 b which causes cup element 26 to rotate, while cup element 48, which turns on a bearing, is mounted on slider 50. Slider 50 is pulled upwards by stepper motor 29, via a cog belt 56, and the test tube is held between cap and base and caused to rotate.

Figure 4 also shows limit switches 58 and 59, printer 51, with print head 54 and display 52, an actuator 53, which pushes roller 57 towards the body of the test tube to be labelled, and electronic control unit 61.

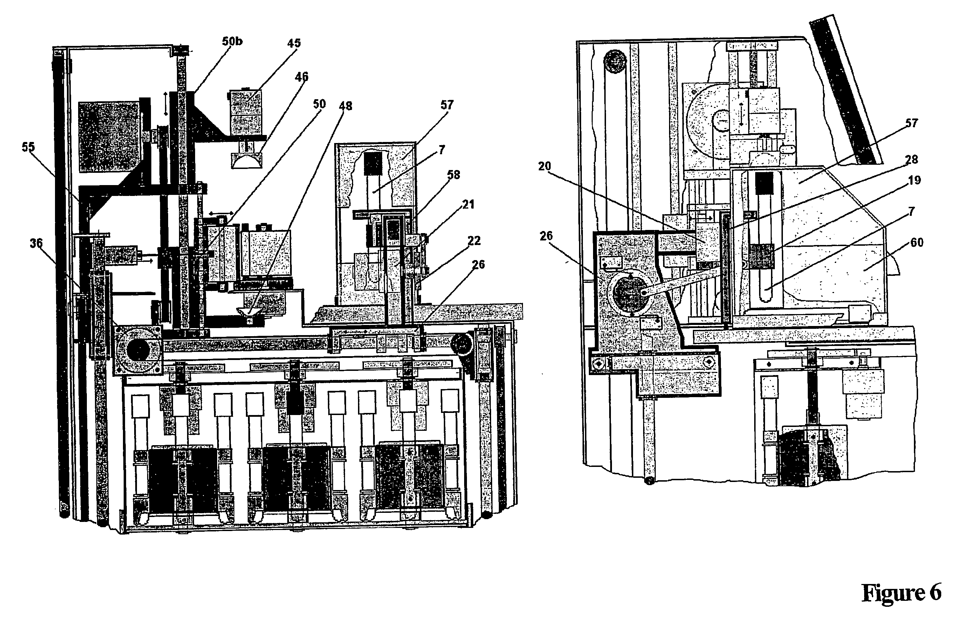

Figures 5 and 6 show the version of the machine with three stacked loading drawers 9, 9 b, and 9 c, and two cylindrical guides 31 and 32, one on either side. Sliders 41 and 42, on which guides 27 are mounted, run vertically on guides 31 and 32. The body of grippers 26 slides horizontally on guides 27, pulled by belt 28, which is driven by stepper motor 36. The whole assembly is pulled up and down by the two belts 33 and 34, driven by stepper motor 35. Counterweight 38, hanging from belt 39 and guided by guides 30, compensates for the weight of assembly 26, 27 and 36, and facilitates the task of stepper motor 35.

As shown in figures 5 and 6, the pick-up grippers take the test tube from the loader and deposit it in the labelling grippers. After labelling, the pick-up grippers take back the test tube and deposit it in container 57, which has two openings to allow the grippers with the test tube to pass. Releasing arm 58 and (bottom) drawer 60 can be seen behind container 57.

Figure 6 shows labelled test tube 7 being taken into deposit container 57, drawer 60, and releasing arm 58.

Conveniently, as already described, the device will be equipped with a control unit, a software program, presence sensors, limit sensors, positioning sensors, power pack, standby battery, keyboard, warning lamps, warning buzzer, switch, and everything needed for the efficient operation of an electronic device, none of which is described, in order to simplify the drawings and the technical description.

The detailed wiring diagrams of the electronics and the control unit are not shown, because numerous equivalent solutions exist, depending on the choice of the various components available on the market. They are consequently within the reach of one skilled in the art; there are countless solutions, and it would be pointless and limiting to mention them. The same applies to the application software, which could have numerous different configurations.

The operation of the machine according to the invention will now be illustrated by reference to figures 1 to 6.

The software of the control unit should first be programmed so that the machine acquires the various functions, and recognises the position of each type of test tube placed in the loaders.

When the machine is switched on, control unit 61 searches for the references of the sensors, and positions pick-up grippers 26 in a "standby" position close to the loaders, with slider 20 retracted under the control of sensors 43. When the "send" key of control unit 61 is operated, it retrieves all the information relating to the test which the patient has requested from the computer to which it is connected, analyses the data, and "prints" the patient's name and other information relating to the test on display 52 to eliminate the risk of mistaken identity. Then, as the positions of all the test tubes loaded into each loader are stored in the memory, pick-up grippers 26 are moved by stepper motor 35 until spring-loaded grippers 19 are alongside the loader selected. Stepper motor 36 then moves the gripper jaws to the selected belt. The control unit activates gear motor 21 until cam 22 has performed half a turn under the control of sensor 43. The slider advances, and grips test tube 7 between spring-loaded jaws 19. Said test tube pushes wedge element 24 back, allowing spring-loaded jaws 19 to grip the test tube. The control unit then reactivates gear motor 21, causing cam 22 to perform another half turn under the control of sensor 43. The slider then returns, taking the chosen test tube out of the loader.

When microswitch 17 is released from the thrust of the test tube, it closes the contact and activates gear motor 15, which moves belt 12, until it causes a new test tube to push the lever of microswitch 17 (figs. 1 and 3) and open the contact.

In the meantime the control unit sends to stepper motors 35 and 36 the pulses required to move pick-up grippers 26 to the two cup elements 46 and 48 (fig. 4). It then activates gear motor 21, which positions the test tube under the two cup elements. The control unit then activates stepper motor 29, and slider 50 rises until it grips the test tube between the two cups 46 and 48. The test tube pushes slider 50 b to the programmed height, according to the type of test tube, so that the label is glued on at the height established by the analysis laboratory. The test tube remains clamped into the cups under the pressure of spring 47.

As slider 50 b rises, it releases limit switch 58, which sends the signal to the control unit. The control unit starts up gear motor 21, until the signal of limit switch 43 is detected, to retract slider 20 of the empty pick-up grippers. During the retraction movement of slider 20, spring-loaded jaws 19 are forced apart to allow the exit of the test tube, and allowing wedge element 24 to lodge in constriction 18, so that spring-loaded jaws 19 remain half-open to facilitate the subsequent grip.

When the pulse of sensor 43 is detected, the control unit activates actuator 53, which pushes rubber roller 57 towards test tube 7. At the same time said unit starts gear motor 45, which causes the test tube to rotate, and sends the signal to printer 51, which prints the label. The label exits from print head 54, is detached from the silicone-coated tape, and continues straight on until it passes between rubber roller 57 and rotating test tube 7, and adheres to the perimeter of said test tube.

The central unit which dialogues with the printer is informed that printing has taken place and ceases to power actuator 53 and gear motor 45; it activates stepper motor 29 in reverse until the signal of limit switch 58 is detected. It then activates gear motor 21 to pick up the test tube in the gripper jaws until the signal of limit switch 43 is detected, at which point it again activates stepper motor 29 until the signal of limit switch 59 is detected, and the labelling grippers are fully open.

When the signal of limit switch 59 has been detected, the control unit activates stepper motor 35 to lower the grippers by the amount required to allow the test tube to exit from cup element 46 (fig. 6). It then activates stepper motor 36 to move the pick-up grippers to the right until the test tube is inside container 57, which is fitted with a drawer. The control unit then reactivates gear motor 21 to take slider 20 back. The test tube is retained by arm 58 and is spring-mounted jaws 19 open, allowing said test tube to fall into drawer 60. When jaws 19 are moved apart to allow the exit of the test tube, wedge element 24, pushed by spring 25, will lodge in constriction 19, and the grippers will be ready to pick up another test tube.

The procedure described above is the cycle for the selection and labelling of one test tube. Said cycle will be repeated for as many test tubes as required for the tests.

A photocell (not illustrated) which checks for the presence of test tubes in the drawer is installed on test tube container 57. This device does not allow the changeover to a new patient unless all test tubes have been removed, to prevent errors caused by forgetfulness.

Other sensors are fitted to ensure the correct operation of the device, but are not described because it would be pointless and limiting to mention them in the ambit of the patent.

The machine is also equipped with a particular power pack with a standby battery which allows the current operation to be terminated or the machine to operate independently.

This invention has been described by reference to a currently preferred embodiment. In practice, however, other safety devices, variations and modifications could be introduced as technologies develop, all of which fall within the protection of this patent. For example, the machine could be floor-standing, to serve one or two blood-sampling chair units, placed on a trolley for use in a hospital ward, or mounted under the top of a table, with the upper part projecting from the table top, to form a complete blood-sampling station.

The machine can operate independently or be connected to the booking desk computer.

## Claims

1. Machine for the automatic selection and labelling of test tubes (7) designed for blood tests and the like, consisting of a modular set of test tube loaders in the form of flat belts (12) on which containers with semi-encircling arms (3) for test-tubes are mounted, and test tube selection means, as well as label printing and sticking means, labelled test tube deposit means, video communication means, a keyboard, warning lamps, **characterised**
**in that** said loaders and said test tube selection means are installed below a work surface of the machine and the other components above it,
**in that** said loaders are mounted on drawers mounted on sliding tracks so that the entire loader can be removed for loading, and in that the test tube containers have feet (4) which rest on the drawer top to discharge their weight.

2. Machine as claimed in claim 1, **characterised in that** the belts **(12)** on which the containers are mounted are motor-driven, and their movement is controlled by sensors activated by the body of the test tube **(7).**

3. Machine according to one or more of the preceding claims, **characterised in that** it includes means which automatically detect the required test tube, remove it from the correct loader, and take it to the printer **(51).**

4. Machine as claimed in claim **3, characterised in that** said means consist of pick-up grippers **(26),** with two spring-loaded jaws **(19)** mounted on a slider **(20),** moved forwards and backwards by a gear motor **(21)** controlled by a limit switch, a cam **(22)** and a connecting rod **(23),** and that a wedge element **(24)** pushed by a spring **(25)** is inserted between the two spring-loaded jaws **(19)** to keep the jaws half-open, ready to grip again.

5. Machine as claimed in claim **4, characterised in that** the pick-up grippers **(26)** are mounted on guides **(31, 32)** and sliders **(41, 42)** which cause them to run horizontally and vertically, via cog belts driven by stepper motors **(35)** and a compensating counterweight **(38).**

6. Machine as claimed in one or more of claims **1** to **5, characterised in that** it includes means designed to stick the label onto the test tube, consisting of rotating cup elements **(46, 48),** one of which is motor-driven, said elements being mounted on sliders designed to retain the test tube between the cap and the base.

7. Machine as claimed in claim **6**, **characterised in that** said sticking means comprise a rubber roller **(57)** which rests on the test tube, mounted on arms pushed by an actuator **(53)** or the like, and that the adhesive label which exits from the printer **(51)** is inserted between said roller and the rotating test tube.

8. Machine as claimed in claims **6** and **7, characterised in that** one of the sliders which retains the test tube between the cups **(46, 48)** is driven by a stepper servomotor via a cog belt, in order to position the test tube at a programmed height in relation to the printer **(51),** so that the label can be stuck onto the test tube in a programmed position.

9. Machine as claimed in one or more of the preceding claims, **characterised in that** the labelled test tubes are deposited by the pick-up grippers **(26)** in a container **(57)** fitted with a drawer, and an arm which releases the test tube.

10. Machine as claimed in claim **9, characterised in that** the drawer is equipped with means which check for the presence of test tubes, and that said means prevent the changeover to a different patient if tubes are present.

11. Machine as claimed in one or more of the preceding claims, **characterised in that** it includes electrical power means, equipped with buffer batteries, so that it can terminate the current operation or work independently.

## Patentansprüche

1. Maschine für die automatische Auswahl und Kennzeichnung von Teströhrchen (7), welche für Bluttests und dergleichen ausgestaltet sind, bestehend aus einer modularen Gruppe von Teströhrchenladevorrichtungen in der Form von flachen Gurten (12), an welchen Behälter mit halbumgebenden Armen (3) für Teströhrchen angebracht sind, und Teströhrchenauswahlmittel sowie Kennzeichnungsdruck- und Klebemittel, Absetzmittel für **gekennzeichnet**e Teströhrchen, Videokommunikationsmittel, eine Tastatur, Warnlampen, **dadurch gekennzeichnet,**
**dass** die Ladevorrichtungen und die Teströhrchenauswahlmittel unterhalb einer Arbeitsfläche der Maschine installiert sind und die anderen Komponenten darüber,
**dass** die Ladevorrichtungen an Einschüben, welche auf Führungsschienen angebracht sind, derart angebracht sind, dass die gesamte Ladevorrichtung für ein Beladen entfernt werden kann, und
**dass** die Teströhrchenbehälter Füße (4) aufweisen, welche auf der Einschuboberseite aufliegen, um ihr Gewicht abzuleiten.

2. Maschine nach Anspruch 1, **dadurch gekennzeichnet, dass** die Gurte (12), an welchen die Container angebracht sind, motorisch betrieben sind und ihre Bewegung durch Sensoren, welche von dem Körper des Teströhrchens (7) betätigt werden, gesteuert wird.

3. Maschine nach einem oder mehreren der vorhergehenden Ansprüche, **dadurch gekennzeichnet, dass** sie Mittel aufweist, welche automatisch das benötigte Teströhrchen erfassen, es von der richtigen Ladevorrichtung entfernen und es zu dem Drucker (51) führen.

4. Maschine nach Anspruch 3, **dadurch gekennzeichnet, dass** die Mittel aus Aufnehmgreifern (26) mit zwei federbelasteten Klauen (19), welche an einem Gleitstück (20) angebracht sind, bestehen, welche von einem Antriebsmotor (21) gesteuert von einem Grenzschalter, einem Nocken (22) und einem Verbindungsstab (23) vorwärts und rückwärts bewegt werden, und dass ein Keilelement (24), welches von einer Feder (25) gedrückt wird, zwischen den zwei federbelasteten Klauen (19) eingesetzt ist, um die Klauen halboffen bereit für ein Wiederzugreifen zu halten.

5. Maschine nach Anspruch 4, **dadurch gekennzeichnet, dass** die Aufnehmgreifer (26) an Führungen (31, 32) und Gleitstücken (41, 42) angebracht sind, welche über von Schrittmotoren (35) angetriebenen Zahnriemen und einem Ausgleichsgegengewicht (38) bewirken, dass sie horizontal und vertikal laufen.

6. Maschine nach einem oder mehreren der Ansprüche 1 bis 5, **dadurch gekennzeichnet, dass** sie Mittel aufweist, welch ausgestaltet sind, die Kennzeichnung auf das Teströhrchen zu kleben, bestehend aus drehenden Becherelementen (46, 48), von denen eines motorisch angetrieben ist, wobei die Elemente an Gleitstücken angebracht sind, welche ausgestaltet sind, das Teströhrchen zwischen der Kappe und der Basis zu halten.

7. Maschine nach Anspruch 6, **dadurch gekennzeichnet, dass** die Klebemittel eine Gummirolle (57) umfassen, welche an dem Teströhrchen anliegt und an von einem Betätigungselement (53) oder dergleichen gedrückten Armen angebracht ist, und dass die Klebekennzeichnung, welche den Drucker (51) verlässt, zwischen der Rolle und dem drehenden Teströhrchen eingefügt wird.

8. Maschine nach Anspruch 6 und 7, **dadurch gekennzeichnet, dass** eines der Gleitstücke, welches das Teströhrchen zwischen den Bechern (46, 48) hält, von einem Schrittservomotor über einen Zahnriemen angetrieben wird, um das Teströhrchen in einer programmierten Höhe in Bezug auf den Drucker (51) zu positionieren, sodass die Kennzeichnung auf das Teströhrchen in einer programmierten Position geklebt werden kann.

9. Maschine nach einem oder mehreren der vorhergehenden Ansprüche, **dadurch gekennzeichnet, dass** die **gekennzeichnet**en Teströhrchen von den Aufnehmgreifern (26) und einem Arm, welcher das Teströhrchen freigibt, in einem an einem Einschub angebrachten Container (57) abgelegt werden.

10. Maschine nach Anspruch 9, **dadurch gekennzeichnet, dass** der Einschub mit Mitteln ausgestattet ist, welche die Anwesenheit von Teströhrchen überprüfen, und dass die Mittel den Übergang zu einem anderen Patienten verhindern, wenn Röhrchen vorhanden sind.

11. Maschine nach einem oder mehreren der vorhergehenden Ansprüche, **dadurch gekennzeichnet, dass** sie elektrische Antriebsmittel aufweist, welche mit Pufferbatterien ausgestattet sind, sodass sie den momentanen Vorgang oder die Arbeit unabhängig beenden kann.

## Revendications

1. Machine pour la sélection automatique et l'étiquetage de tubes à essai (7) conçue pour des analyses de sang et similaires, se composant d'un ensemble modulaire de chargeurs de tube à essai sous forme de courroies plates (12) sur lesquelles des récipients avec des bras semi-circulaires (3) pour les tubes à essai sont montés et des moyens de sélection de tube à essai, ainsi que des moyens d'impression et de collage d'étiquette, des moyens de dépôt de tube à essai étiqueté, des moyens de communication vidéo, un clavier, des lampes d'avertissement, **caractérisée :**
**en ce que** lesdits chargeurs et lesdits moyens de sélection de tube à essai sont installés sous une surface de travail de la machine et les autres composants au-dessus de cette dernière,
**en ce que** lesdits chargeurs sont montés sur des tiroirs montés sur des rails coulissants de sorte que tout le chargeur peut être retiré ou chargé, et
**en ce que** les récipients de tube à essai ont des pieds (4) qui reposent sur la partie supérieure du tiroir pour décharger leur poids.

2. Machine selon la revendication 1, **caractérisée en ce que** les courroies (12) sur lesquelles les récipients sont montés, sont entraînées par moteur, et leur mouvement est contrôlé par des capteurs activés par le corps du tube à essai (7).

3. Machine selon une ou plusieurs des revendications précédentes, **caractérisée en ce qu'**elle comprend des moyens qui détectent automatiquement le tube à essai requis, le retirent du bon chargeur et l'emmènent vers l'imprimante (51).

4. Machine selon la revendication 3, **caractérisée en ce que** lesdits moyens se composent de pinces de prélèvement (26) avec deux mâchoires à ressort (19) montées sur une glissière (20) déplacée vers l'avant et vers l'arrière par un moteur à engrenages (21) contrôlé par un commutateur de fin de course, une came (22) et une tige de raccordement (23), et **en ce qu'**un élément de cale (24) poussé par un ressort (25) est inséré entre les deux mâchoires à ressort (19) pour maintenir les mâchoires à moitié ouvertes, prêtes à saisir à nouveau.

5. Machine selon la revendication 4, **caractérisée en ce que** les pinces de prélèvement (26) sont montées sur des guides (31, 32) et des glissières (41, 42) qui les amènent à circuler horizontalement et verticalement, via des courroies synchrones entraînées par des moteurs pas à pas (35) et un contrepoids de compensation (38).

6. Machine selon une ou plusieurs des revendications 1 à 5, **caractérisée en ce qu'**elle comprend des moyens conçus pour coller l'étiquette sur le tube à essai, se composant d'éléments rotatifs en forme de coupelle (46, 48), dont un est entraîné par moteur, lesdits éléments étant montés sur des glissières conçues pour retenir le tube à essai entre le capuchon et la base.

7. Machine selon la revendication 6, **caractérisée en ce que** lesdits moyens de collage comprennent un rouleau de caoutchouc (57) qui repose sur le tube à essai, monté sur des bras poussés par un actionneur (53) ou similaire, et **en ce que** l'étiquette adhésive qui sort de l'imprimante (51) est insérée entre ledit rouleau et le tube à essai rotatif.

8. Machine selon les revendications 6 et 7, **caractérisée en ce que** l'une des glissières qui retient le tube à essai entre les coupelles (46, 48) est entraînée par un servomoteur pas à pas via une courroie synchrone, afin de positionner le tube à essai à une hauteur programmée par rapport à l'imprimante (51), de sorte que l'étiquette peut être collée sur le tube à essai dans une position programmée.

9. Machine selon une ou plusieurs des revendications précédentes, **caractérisée en ce que** les tubes à essai étiquetés sont déposés par les pinces de prélèvement (26) dans un récipient (57) équipé d'un tiroir, et un bras qui libère le tube à essai,

10. Machine selon la revendication 9, **caractérisée en ce que** le tiroir est équipé de moyens qui vérifient la présence des tubes à essai, et **en ce que** lesdits moyens empêchent la permutation avec un patient différent si des tubes sont présents.

11. Machine selon une ou plusieurs des revendications précédentes, **caractérisée en ce qu'**elle comprend des moyens de puissance électrique, équipés de batteries tampons de sorte qu'ils peuvent terminer l'opération ou travail en cours indépendamment.
